# EUROPEAN PATENT SPECIFICATION

(11) **EP 2 662 348 B1**
(45) Date of publication and mention of the grant of the patent: **01.03.2017**
(21) Application number: 12181838.9
(22) Date of filing: 27.08.2012
(51) Int. Cl.: C04B 41/48

(54) **A method for manufacturing of resin-coated stone slabs**
Verfahren zur Herstellung von harzbeschichteten Steinplatten
Procédé de fabrication de dalles en pierre recouvertes de résine

(30) Priority: 06.05.2012 PL 39906712
(43) Date of publication of application: 13.11.2013
(73) Proprietor: EGC SEED CAPITAL Sp. z.o.o., 90-752 Lodz (PL); Przedsiebiorstwo "Amepox" So. z o.o., 90-268 Lodz (PL)
(72) Inventor: Moscicki, Andrzej, 91-503 Lodz (PL); Mazurek, Przemyslaw, 94-007 Lodz (PL)
(74) Representative: Eupatent.pl

(56) References cited:
- WO-A1-2009/130546

## Description

The present invention relates to a method for manufacturing of resin-coated stone slabs.

Stone slabs, used in the form of various products, especially as road and wall slabs, stair steps and treads, sills, worktops, tops for sink or other equipment elements of kitchen, bathroom, hall, office, hotel, hospital, food courts etc., when being used, are often exposed to biological contamination of various kinds. These contaminants settle especially in microporous materials and microcracks in damp environments, where residues of water, food or other organic compounds remain. In such an environment, bacterial flora develops very quickly.

Stone slabs of this kind are usually produced by cutting a stone block, for example granite or travertine, into slabs of different thickness, which are then subject to relevant machining in order to give the slabs appropriate functional properties. The exposed surface of the slab is covered with a layer of filling material based on resin in order to fill the pores and microcracks; afterwards the slab is polished in order to obtain desirable smoothness.

An international patent application no. W2006052253A1 features a scratchproof kitchen worktop layered with hardened resin composition, containing polyester resin, carboxylic acid anhydride, non-organic filler, where the diameter of at least 80% of the particles equals 10-40 microns, and organic filler, where the diameter of at least 80% of the particles equals more than 90 microns. Such composition guarantees high resistance to scratches, but it has no germicidal properties.

The products from resin-coated slab known so far are characterised by durability and resistance to scratches, however they are vulnerable to biological contamination as much as other surfaces.

The aim of this invention is the development of the method of manufacturing resin-coated slabs with higher resistance to contamination and bacteria, with the potential to be used as floor slabs, wall slabs or elements of the equipment for kitchen and other types of functional spaces, with both individual and industrial application including public utility facilities.

The object of the invention is a method for manufacturing of resin-coated stone slabs, comprising applying a resin composition on an exposed surface of a large-scale stone slab cut from a stone block, and next submitting it to thermal treatment to harden the resin, and machining the large-scale stone slab to a desired shape and size, wherein the resin composition is prepared by mixing a polyester resin in a temperature between 35°C and 45°C with a colloidal dispersion of silver nanoparticles of a size from 3nm to 8nm and concentration of at least 1% in hexane, allowing hexane to evaporate and cooling the mixture to a temperature of about 20°C, and next adding a polyester resin hardener to the mixture, wherein the amount of the colloidal dispersion of silver nanoparticles is selected so as to obtain a mass concentration of silver in the resin composition in the amount of 50 ppm to 100 ppm.

The use of silver nanoparticles in resin layer on the stone slab surface inhibits the development of bacteria on the surface of products manufactured from this slab, for example kitchen worktop or floor slabs, during their usage. Due to the uniform distribution of nanosilver particles throughout the whole resin composition applied on the whole surface of stone slab, the slab retains its properties for a long time of its use. Adding nanosilver particles in the form of colloid based on hexane allows their precise mixing with the whole resin composition. Application of the nanoparticles in the resin layer guarantees product resistance to bacteria development. In addition, this layer is highly resistant to wear, and remains within the product for a long time of use, retaining the aesthetic and visual value of the stone.

The inhibition of bacteria development on the slab surface was observed for the mass concentration of silver nanoparticles equal to 50 ppm in the resin composition. One can also apply higher concentration, however it comes at a higher cost of the final product. It is not recommended to apply concentration above 100ppm, due to the noticeably darkening of the colour of the resin preparations, whilst the desirable parameter is high transparency whereby the natural colour of the stone from which the slab is made is not darkened.

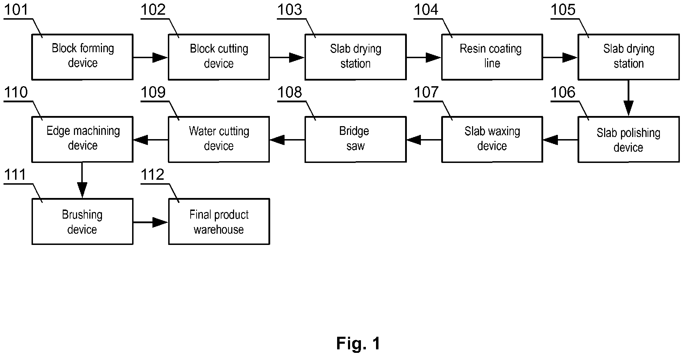

The present invention is presented by means of exemplary embodiment on a drawing, in which Fig. 1 presents a diagram of a technological line for manufacturing the resin-coated slabs using the method according to the invention.

In the first step, stone slabs (e.g. granite or travertine) delivered to the plant are formed using the block forming device 101, after which they are cut into large-scale slabs, using the block cutting device 102. Next, the large-scale slabs are dried at the station 103, thus preparing the slab surface for resin finishing. The next step involves resin finishing of the slabs on the line 104 - the resin composition is applied on the surface of the slab; the composition penetrates natural pores in the slab, enhancing the durability of its surface and resistance to scratching.

In order to prepare the resin composition used in the invention method, a polyester resin is first mixed with a concentrate that is a colloidal dispersion of nanosilver in hexane, having a concentration of at least 1% (10,000 ppm). During the colloid introduction process, the resin is additionally heated to a temperature between 35°C and 45°C while constantly mixing the dispersion. Then, after lowering the temperature to 20°C, a hardener is applied. During the above process, hexane is removed by evaporating and nanosilver is introduced to resin. Increasing the temperature during mixing liquefies resin to a form of paste and accelerates evaporation of hexane. The dispersion of silver nanoparticles in hexane is added in the amount suitable to obtain the final mass concentration of nanosilver particles in the polyester resin on the level of at least 50 ppm.

The resin composition is applied on the surface of the large-scale slab in such a way as to fill the natural pores and microcracks of the stone.

### Example 1

96 parts per weight of Solido Transparente formula produced by Tenax, Verona, Italy, on the basis of polyester resin, in the form of paste, were mixed in the temperature of 45°C with 1 part per weight of NanoSilver HX 10000 by Amepox Sp. z o.o., 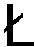 ódź, Poland, constituting the colloid of silver nanoparticles of 3nm to 8nm in hexane with 1% concentration. After the mixture had been cooled to the temperature of approx. 20°C, 3 parts per weight of hardener were added; the hardener was provided together with Solido Transparente formula. Thus prepared composition had the silver nanoparticles concentration of 100 ppm. The addition of nanosilver slightly darkened the straw-yellow colour of resin.

### Example 2

965 parts per weight of Fluido Transparente formula produced by Tenax, Verona, Italy, on the basis of polyester resin, in a liquid form, were mixed in the temperature of 35°C with 5 parts per weight of NanoSilver HX 10000 by Amepox Sp. z o.o., 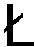 ódź, Poland, constituting the colloid of silver nanoparticles of 3nm to 8nm in hexane with 1% concentration. After the mixture had been cooled to the temperature of approx. 20°C, 30 parts per weight of hardener were added; the hardener was provided together with Fluido Transparente formula. Thus prepared composition had the silver nanoparticles concentration of 50 ppm. The addition of nanosilver did not alter the straw-yellow colour of resin.

After the resin composition has been applied on the large-scale slab at the station 104, it is submitted to thermal treatment at the station 105 to harden the resin, after which its surface is smoothed using the polishing device 106. Next, the slab is waxed using the device 107 in order to give it extra polish; then, the large-scale slab is cut at the cutting station 108, using a bridge saw, to a desirable size, depending on the further use of the slab. Smaller parts are cut using for example water jet 109. Afterwards, the slab edges are finished using the device 110. In the next step, the finished edges and surface are cleaned by a brushing device 111 or other device used for surface smoothing, thus producing final products, which are placed in a final product warehouse 112. Alternatively, for side edges of final products such as kitchen worktops or sills, resin composition may be applied, correspondingly to the steps 104-107.

## Claims

1. A method for manufacturing of resin-coated stone slabs, comprising applying a resin composition on an exposed surface of a large-scale stone slab cut from a stone block, and next submitting it to thermal treatment to harden the resin, and machining the large-scale stone slab to a desired shape and size, **characterized by** preparing the resin composition by mixing a polyester resin in a temperature between 35°C and 45°C with a colloidal dispersion of silver nanoparticles of a size from 3nm to 8nm and concentration of at least 1% in hexane, allowing hexane to evaporate and cooling the mixture to a temperature of about 20°C, and next adding a polyester resin hardener to the mixture, wherein the amount of the colloidal dispersion of silver nanoparticles is selected so as to obtain a mass concentration of silver in the resin composition in the amount of 50 ppm to 100 ppm.

## Patentansprüche

1. Verfahren für das Herstellen kunstharzbeschichteter Steinplatten, umfassend das Auftragen einer Kunstharzzusammensetzung auf eine exponierte Oberfläche einer aus einem Steinblock geschnittenen großskaligen Steinplatte, Unterziehen der Steinplatte in einem nächsten Schritt einer Wärmebehandlung, um das Kustharz zu härten, und Oberflächenbearbeiten der großskaligen Steinplatte in eine gewünschte Form und Größe, **gekennzeichnet durch** das Herstellen der Kunstharzzusammensetzung **durch** Mischen eines Polyesterharzes bei einer Temperatur zwischen 35 °C und 45 °C mit einer kolloidalen Dispersion von Silber-Nanopartikeln einer Größe von 3 nm bis 8 nm und einer Konzentration von mindestens 1 % in Hexan, Verdunstenlassen des Hexans und Abkühlen der Mischung auf eine Temperatur von etwa 20 °C, als Nächstes **durch** Zugeben eines Polyesterharz-Härters zu der Mischung, wobei die Menge der kolloidalen Dispersion von Silber-Nanopartikeln ausgewählt wird, um eine Massenkonzentration von Silber in der Kunstharzzusammensetzung von 50 ppm bis 100 ppm zu erhalten.

## Revendications

1. Méthode de fabrication de dalles de pierre enrobées de résine, comprenant l'application d'une composition de résine sur une surface exposée d'une dalle de pierre à grande échelle découpée dans un bloc de pierre, puis son exposition à un traitement thermique pour durcir la résine, et l'usinage de la dalle de pierre à grande échelle à la forme et aux dimensions désirées, **caractérisé par** la préparation de la composition de résine avec le mélange d'une résine de polyester à une température comprise entre 35°C et 45°C et une dispersion colloïdale de nanoparticules d'argent, d'une granulométrie comprise entre 3 nm et 8 nm et une concentration minimum de 1% d'hexane, puis l'évaporation de l'hexane et le refroidissement du mélange à une température d'environ 20°C, suivie de l'ajout dans le mélange d'un durcisseur de résine en polyester, la quantité de dispersion colloïdale de nanoparticules d'argent étant sélectionnée de façon à obtenir une concentration massique de 50 ppm à 100 ppm d'argent dans la composition de résine.
